# EUROPÄISCHE PATENTANMELDUNG

(11) **EP 4 631 334 A1**
(43) Veröffentlichungstag der Anmeldung: **15.10.2025**
(21) Anmeldenummer: 24169435.5
(22) Anmeldetag: 10.04.2024
(51) Int. Cl.: A01C 7/08

(54) **PNEUMATISCH ARBEITENDE LANDWIRTSCHAFTLICHE VERTEILMASCHINE ZUM VERTEILEN VON SAATGUT ODER DÜNGEMITTEL**

(71) Anmelder: Kverneland Group Soest GmbH, 59494 Soest (DE)
(72) Erfinder: BEUMKER, Martin, 59494 Soest (DE)
(74) Vertreter: Bittner, Thomas L.

(57) **Zusammenfassung**

Die Erfindung betrifft eine pneumatisch arbeitende landwirtschaftliche Verteilmaschine zum Verteilen von Saatgut oder Düngemittel, mit einem Vorratsbehälter (1) für ein auszubringendes Verteilgut; einem mit dem Vorratsbehälter (1) in Verbindung stehenden Dosierorgan (2); einem Verteiler (13), der über eine pneumatische Förderleitung (3) mit dem Dosierorgan (2) verbunden ist; eine pneumatische Förderleitung (3), bei der im Bereich eines Umlenkbogens (6) ein Richtungswechsel hin zu einem im Wesentlichen aufrechtstehenden Zerstreuungsrohr (11) ausgebildet ist, welches an den Verteiler (13) herangeführt ist; und von dem Verteiler (13) zu einzelnen Ausbringorganen führenden Leitungen. Hierbei ist Folgendes vorgesehen: ein Rohrausgang (16) des Umlenkbogens (6) und ein Rohreingang (19) des Zerstreuungsrohrs (11) sind über mindestens ein gerades Zwischenrohrstück (9) miteinander verbunden und das mindestens eine Zwischenrohrstück (9) weist auf einer dem Rohrausgang (16) des Umlenkbogens (6) zugewandten Eingangsseite (17) und / oder auf einer dem Rohreingang (19) des Zerstreuungsrohrs (11) zugewandten Ausgangsseite (18) eine Gehrungsschnittfläche (10) auf, derart, dass eine Rohrmitte im Bereich des Rohreingangs (19) des Zerstreuungsrohrs (11) und eine Rohrmitte im Bereich der Ausgangsseite des (18) Umlenkbogens (6) in einer Richtung quer zur Längsrichtung des im Wesentlichen aufrechtstehenden Zerstreuungsrohr (11) zueinander versetzt angeordnet sind.

## Beschreibung

Die Erfindung betrifft eine pneumatisch arbeitende landwirtschaftliche Verteilmaschine zum Verteilen von Saatgut oder Düngemittel.

### Hintergrund

Solche Verteilmaschinen werden verwendet, um in der Landwirtschaft Saatgut oder Düngemittel in den Boden einzubringen oder auf dem Feld zu verteilen.

Bei der landwirtschaftlichen Verteilmaschine wird das auszubringende Material wie Saatgut oder Düngemittel üblicherweise in einem Vorratsbehälter bereitgestellt, um es hiervon ausgehend mittels eines Dosierorgans zu dosieren, wobei Dosiermengen zum Beispiel ein oder mehrere Saatkörner umfassen können. Mit Hilfe eines Verteilers wird das dosierte auszubringende Material dann ausgebracht. Bei einer pneumatisch arbeitenden landwirtschaftlichen Verteilmaschine wird das auszubringende Material zum Beispiel zwischen dem Verteiler und dem Dosierorgan mit Hilfe eines Luftstroms durch eine pneumatische Förderleitung transportiert.

Aus dem Dokument EP 0 956 757 B1 ist eine pneumatisch arbeitende Verteilmaschine zum Verteilen von Saatgut oder Düngemittel bekannt. Die Verteilmaschine weist einen Vorratsbehälter für das Verteilgut, ein hiermit in Verbindung stehendes Dosierorgan, einen mit dem Dosierorgan über eine pneumatische Förderleitung in Verbindung stehenden Verteiler sowie von dem Verteiler zu einzelnen Ausbringorganen führende Leitungen auf. Die pneumatische Förderleitung beschreibt ab einem Umlenkbogen einen Richtungswechsel und ist im Wesentlichen senkrecht aufsteigend an dem Verteiler herangeführt. Die Förderleitung ist im Umlenkbogen als Flachrohrbogen ausgebildet. Es ist ein Übergang des unrunden Flachrohrbogens in einen kreisförmigen Querschnitt eines Zerstreuungsrohres ausgebildet. Das Zerstreuungsrohr weist zwischen Flachrohrbogen und Verteiler uneben ausgebildete Innenwandungen auf.

Im Dokument EP 2 257 149 B1 ist eine Anordnung für eine pneumatisch arbeitende Verteilmaschine offenbart, bei der eine Förderleitung zum Zerstreuungsrohr hin mit mehreren gekrümmter Rohrabschnitten gebildet ist, die Rohrabschnitte mit gegensätzlicher Krümmungsrichtung umfassen.

### Zusammenfassung

Aufgabe der Erfindung ist es, eine pneumatisch arbeitende landwirtschaftliche Verteilmaschine zum Verteilen von Saatgut oder Düngemittel mit einer verbesserten Förderleitung zum Transport des zu verteilenden Materials anzugeben.

Zur Lösung ist eine pneumatisch arbeitende landwirtschaftliche Verteilmaschine zum Verteilen von Saatgut oder Düngemittel nach dem unabhängigen Anspruch 1 geschaffen. Ausgestaltungen sind Gegenstand von abhängigen Unteransprüchen.

Nach einem Aspekt ist eine pneumatisch arbeitende landwirtschaftliche Verteilmaschine zum Verteilen von Saatgut oder Düngemittel geschaffen, die Folgendes aufweist: einen Vorratsbehälter für ein auszubringendes Verteilgut; ein mit dem Vorratsbehälter in Verbindung stehendes Dosierorgan; einem Verteiler, der über eine pneumatische Förderleitung mit dem Dosierorgan verbunden ist; eine pneumatische Förderleitung, bei der im Bereich eines Umlenkbogens ein Richtungswechsel hin zu einem im Wesentlichen aufrechtstehenden Zerstreuungsrohr ausgebildet ist, welches an den Verteiler herangeführt ist; und von dem Verteiler zu einzelnen Ausbringorganen führenden Leitungen. Ein Rohrausgang des Umlenkbogens und ein Rohreingang des Zerstreuungsrohrs sind über mindestens ein gerades Zwischenrohrstück miteinander verbunden. Das mindestens eine Zwischenrohrstück weist auf einer dem Rohrausgang des Umlenkbogens zugewandten Eingangsseite und / oder auf einer dem Rohreingang des Zerstreuungsrohrs zugewandten Ausgangsseite eine Gehrungsschnittfläche auf, derart, dass eine Rohrmitte im Bereich des Rohreingangs des Zerstreuungsrohrs und eine Rohrmitte im Bereich der Ausgangsseite des Umlenkbogens in einer Richtung quer zur Längsrichtung des im Wesentlichen aufrechtstehenden Zerstreuungsrohr zueinander versetzt angeordnet sind.

Mit Hilfe der Gehrungsschnittfläche ist es ermöglicht, die jeweilige Rohrmitte auf der Ausgangsseite des Umlenkbogens und des Rohreingangs des Zerstreuungsrohres in horizontaler Richtung versetzt zueinander anzuordnen. Dieses unterstützt ein nicht mittiges oder nicht zentriertes Einbringen des zu verteilenden Materials aus dem Umlenkbogen über das mindestens eine Zwischenrohrstück in dem Zerstreuungsrohr, was die funktionsgerechte Zuführung des zu verteilenden Materials durch das Zerstreuungsrohr hin zum Verteiler verbessert. Das als gerader (krümmungsfreier) Rohrabschnitt ausgebildete mindestens eine Zwischenrohrstück kann mit minimiertem Fertigungsaufwand hergestellt werden und weist aufgrund der geraden Rohrausführung eine einfache Rohrgeometrie auf. Es ermöglicht so eine effiziente und auf einfache Weise herstellbare Ausbildung des Versatzes zwischen den Rohrmitten im Bereich der Ausgangsseite des Umlenkbogens und des Rohreingangs des Zerstreuungsrohres. Die Rohrmitte im Bereich des mindestens einen Zwischenrohrstücks verläuft hierbei geneigt in Bezug auf die Rohrmitte entlang der Längsrichtung des aufrechtstehenden Zerstreuungsrohrs.

Die Schnittfläche am Umlenkbogen und / oder am Zerstreuungsrohr, welche der Gehrungsschnittfläche des Zwischenrohrstücks gegenüberliegend angeordnet und mit dieser verbunden ist, kann auch als Gehrungsschnittfläche ausgebildet sein, zum Beispiel mit gleicher Neigung in Bezug zur jeweiligen Rohrlängsrichtung.

Das mindestens eine gerade Zwischenrohrstück kann aufrechtstehend oder geneigt zur Längsrichtung des aufrechtstehenden Zerstreuungsrohres verlaufen angeordnet sein.

Die pneumatische Förderleitung kann im Umlenkbogen, im mindestens einen Zwischenrohrstück und im Zerstreuungsrohr einen im Wesentlichen gleichen Rohrquerschnitt aufweisen. Bei dieser Ausgestaltung steht für den pneumatisch getriebenen Transport des zu verteilenden Materials in den unterschiedlichen Abschnitten der Förderleitung im Wesentlichen ein gleicher Rohrquerschnitt zur Verfügung.

Die pneumatische Förderleitung kann im Umlenkbogen, im mindestens einen Zwischenrohrstück und im Zerstreuungsrohr mit einem runden Rohrquerschnitt ausgeführt sein. Der Rohrquerschnitt kann ein kreisförmiger Rohrquerschnitt sein.

Die pneumatische Förderleitung kann zumindest im Zerstreuungsrohr eine unebene innere Rohroberfläche aufweisen. Die innere Rohroberfläche kann zumindest im Bereich des Zerstreuungsrohres eine gewellte Oberfläche sein. Das Zerstreuungsrohr kann in einer Ausgestaltung ein Wellenrohr sein.

Die pneumatische Förderleitung kann im Umlenkbogen und im mindestens einen Zwischenrohrstück eine ebene innere Rohroberfläche aufweisen. Die innere Rohroberfläche kann im Bereich des Umlenkbogens und des mindestens einen Zwischenrohrstücks glatt ausgeführt sein.

Der Rohrausgang des Umlenkbogens und der Rohreingang des Zerstreuungsrohrs können über mehrere gerade Zwischenrohrteilstücke miteinander verbunden sein. Es können genau zwei oder mehr Zwischenrohrteilstücke, die jeweils für sich als gerade Rohrabschnitte ausgeführt sind. Das Zwischenrohrstück ist dann mehrteilig ausgebildet und kann hierbei ein- oder mehrstückig ausgeführt sein. Eine einteilige Ausführung kann beispielweise mittels stoffschlüssiger Verbindung zwischen den Zwischenrohrteilstücken hergestellt sein. Alternativ können die Zwischenrohrteilstücke in einer mehrstückigen Ausführung lösbar miteinander verbunden sein, zum Beispiel mittels Steck- oder Schraubverbindung.

Mindestens eines der mehreren geraden Zwischenrohrteilstücke, welches benachbart zum Zerstreuungsrohr anordenbar ist, kann aufrechtstehend gebildet sein.

In einer Ausgestaltung kann das eine der mehreren geraden Zwischenrohrteilstücke, welches benachbart zum Zerstreuungsrohr gebildet ist, an dem Zerstreuungsrohr einstückig angeformt sein. Auf diese Weise kann es als eingangsseitiges Endstück des Zerstreuungsrohres ausgebildet sein, welches, sofern das Zerstreuungsrohr oberhalb dieses Endstücks als Wellenrohr ausgeführt ist, frei von der Wellenrohrstruktur ist, also insbesondere mit glatter innerer Oberfläche.

Bei den mehreren Zwischenrohrteilstücken können einander gegenüberliegende Gehrungsschnittflächen miteinander verbunden sein. Bei dieser Ausführung weisen zwei einander gegenüberliegende und miteinander verbundene Enden von benachbart angeordneten Zwischenrohrteilstücken jeweils eine Gehrungsschnittfläche auf. Die Zwischenrohrteilstücke können im Bereich der Gehrungsschnittflächen miteinander einstückig verbunden sein.

Bei dieser oder anderen Ausgestaltungen können die jeweiligen Längsrichtungen benachbart zueinander angeordneter gerader Zwischenrohrteilstücke einen stupfen Winkel einnehmen, was bedeutet, dass die benachbarten Zwischenrohrteilstücke nicht parallel zueinander verlaufen.

Auf den dem Umlenkbogen und dem Zerstreuungsrohr zugewandten Seiten können die geraden Zwischenrohrteilstücke eine quer (90 Grad Winkel) zur jeweiligen Längsrichtung des zugeordneten Zwischenrohrteilstücks verlaufende Schnittfläche aufweisen.

Bei einer Ausführungsform der Anordnung kann vorgesehen sein, dass die Gehrungsschnittfläche auf der dem Rohreingang des Zerstreuungsrohrs zugewandten Ausgangsseite des mindestens einen Zwischenrohrstücks gebildet ist.

Eine Schnittfläche auf der mit Rohrausgang des Umlenkbogens zugewandten Eingangsseite des mindestens einen Zwischenrohrstücks kann quer zur Längsrichtung des im Wesentlichen aufrechtstehenden Zerstreuungsrohr gebildet sein. Die Schnittfläche am Rohrausgang des Umlenkbogens kann hierzu passend quer zur Längsrichtung des aufrechtstehenden Zerstreuungsrohrs verlaufen.

Das mindestens eine Zwischenrohrstück kann am Rohrausgang des Umlenkbogens einstückig angeformt sein. Das einstückige Anformen kann mit Hilfe einer stoffschlüssigen Verbindung zwischen dem Zwischenrohrstück und dem Umlenkbogen ausgebildet sein.

Das mindestens eine Zwischenrohrstück kann am Rohreingang des Zerstreuungsrohrs einstückig angeformt sein. Die einstückige Anformung kann mittels einer stoffschlüssigen Verbindung zwischen dem Zwischenrohrstück und dem Zerstreuungsrohr ausgeführt sein.

Die pneumatische Förderleitung kann einen Schlauchrohrabschnitt aufweisen, welcher an einen Rohreingang des Umlenkbogens anschließt. Der Schlauchrohrabschnitt kann aus einem Kunststoffmaterial gebildet sein. Zwischen dem Schlauchrohrabschnitt und dem Umlenkbogen kann eine einstückige Anformung vorgesehen sein, insbesondere mittels einer stoffschlüssigen Verbindung.

Der Umlenkbogen, das mindestens eine Zwischenrohrstück und / oder das Zerstreuungsrohr können jeweils als einstückiger Rohrabschnitt ausgeführt sein.

Mit dem Umlenkbogen kann eine Umlenkung von wenigstens 90 Grad ausgebildet sein. Der Umlenkbogen kann in einer Ausführung als im Wesentlichen rechtwinkliger Umlenkbogen mit einer Umlenkung von etwa 90 Grad ausgebildet sein. Mit Hilfe des Umlenkbogens kann eine Umlenkung der Transportrichtung in der pneumatischen Förderleitung aus einer horizontalen Richtung in die vertikale Richtung ausgebildet sein. Alternativ kann der eine Umlenkung von weniger als 90 Grad beschreiben.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung für eine landwirtschaftliche Verteilmaschine;
- Fig. 2: eine schematische Darstellung eines Abschnitts einer Förderleitung mit einem mehrteiligen Zwischenrohrstück mit Gehrungsschnittfläche;
- Fig. 3: eine schematische Darstellung eines Abschnitts einer weiteren Förderleitung mit einem einteiligem Zwischenrohrstück mit Gehrungsschnittfläche;
- Fig. 4: eine schematische Darstellung eines Abschnitts einer anderen Förderleitung mit einem einteiligem Zwischenrohrstück mit Gehrungsschnittfläche;
- Fig. 5: eine schematische Darstellung eines Abschnitts einer weiteren Ausgestaltung einer Förderleitung mit einem einteiligem Zwischenrohrstück mit Gehrungsschnittfläche und
- Fig. 6: eine schematische Darstellung eines Abschnitts einer Förderleitung in einer weiteren Ausführung mit einem mehrteiligen Zwischenrohrstück mit Gehrungsschnittfläche.

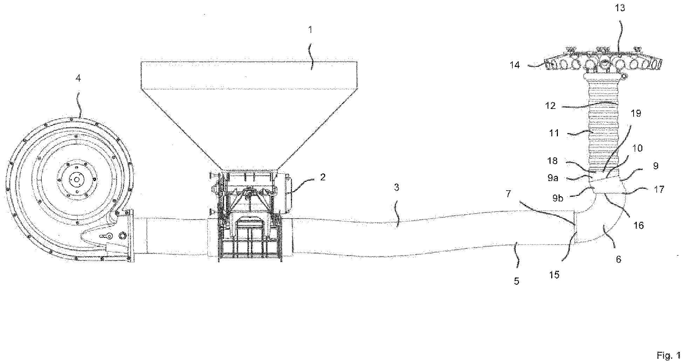

Fig. 1 zeigt eine schematische Darstellung einer Anordnung für eine landwirtschaftliche Verteilmaschine mit einem Vorratsbehälter 1, in welchem ein mittels der landwirtschaftlichen Verteilmaschine zu verteilendes oder auszubringendes Material bereitgestellt wird, insbesondere Saatgut oder Dünger. Aus dem Vorratsbehälter 1 gelangt das zu verteilende Material zu einem Dosierorgan 2, welches eingerichtet ist, Dosiermengen des zu verteilenden Materials bereitzustellen. Die Dosiermengen 2, welche zum Beispiel einzelne Körner oder Körnermengen umfassen können, gelangen in eine pneumatische Förderleitung 3, an welche eine Gebläseeinrichtung 4 zum Erzeugen eines pneumatischen Luftstroms zum Transportieren der Dosiermengen in der Förderleitung 3 angeschlossen ist.

Über einen Schlauchabschnitt 5 der Förderleitung 3 gelangt das zu verteilende Material in einen Umlenkbogen 6, welcher beispielhaft eine Richtungsänderung 90 Grad beschreibt, im gezeigten Ausführungsbeispiel von einer horizontalen Transportrichtung im Schlauchabschnitt 5 ausgehend. Auf einer Eingangsseite 7 des Umlenkbogens 6 ist dieser mit dem Schlauchabschnitt 5 verbunden, beispielsweise stoffschlüssig.

Auf einer Ausgangsseite 8 ist der Umlenkbogen 6 mit einem Zwischenrohrstück 9 verbunden, sei es lösbar oder nicht lösbar. Das Zwischenrohrstück 9 ist im gezeigten Beispiel mehrteilig mit einem ersten und einem zweiten Zwischenteilrohrstücken 9a, 9b gebildet ist, welche lösbar oder nicht lösbar verbunden sind und jeweils als gerader (krümmungsfreier) Rohrabschnitt ausgeführt sind. Das Zwischenrohrstück 9 ist mit Gehrungsschnittflächen 10 gebildet, die beim dargestellten Beispiel miteinander verbunden sind, zum Beispiel stoffschlüssig.

Gehrungsschnittflächen 10 verlaufen zur Längsrichtung eines Zerstreuungsrohres 11 sowie zur jeweiligen Längsrichtung der geraden Zwischenteilrohrstücke 9a, 9b schräg oder geneigt, welches sich im gezeigten Beispiel aufrechtstehend erstreckt und mit dem Zwischenrohrstück 9 verbunden ist.

Das Zerstreuungsrohr 11 ist im gezeigten Beispiel als Wellenrohr mit einer gewellten inneren Rohroberfläche 12 ausgebildet.

Das Zerstreuungsrohr 11 ist an einem Verteiler 13 herangeführt, mit dem das zu verteilende Material auf mehrere Verteilerausgänge 14 verteilt wird, von denen ausgehend sich zu Ausbringorganen führende Leitungen erstrecken (nicht dargestellt), über welche das Material verteilt oder ausgebracht wird.

Der Umlenkbogen 6 empfängt das zu verteilende Material über einen Rohreingang 15 und gibt es nach dem Umlenken über einen Rohrausgang 16 an eine Eingangsseite 17 des Zwischenrohrstücks 9 ab. Dort gelangt aus über eine Ausgangsseite 18 des Zwischenrohrstücks 9 zu einem Rohreingang 19 des Zerstreuungsrohrs 11.

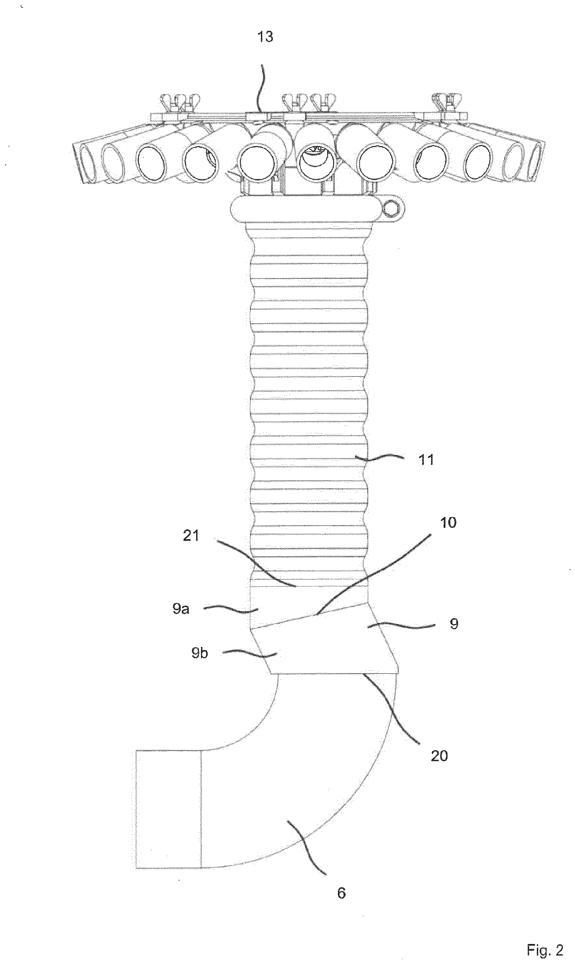

Fig. 2 zeigt eine vergrößerte schematische Darstellung eines Abschnitts der Förderleitung 3 mit dem mehrteiligen Zwischenrohrstück 9 mit den Gehrungsschnittflächen 10. Schnittflächen 20, 21 auf der Eingangsseite 17 und der Ausgangsseite 18 des Zwischenrohrstücks 9 verlaufen im gezeigten Beispiel im Wesentlichen quer zur Längsrichtung des aufrechtstehenden Zerstreuungsrohrs 11, wobei dessen Längsrichtung im Beispiel in Vertikalrichtung ausgerichtet ist.

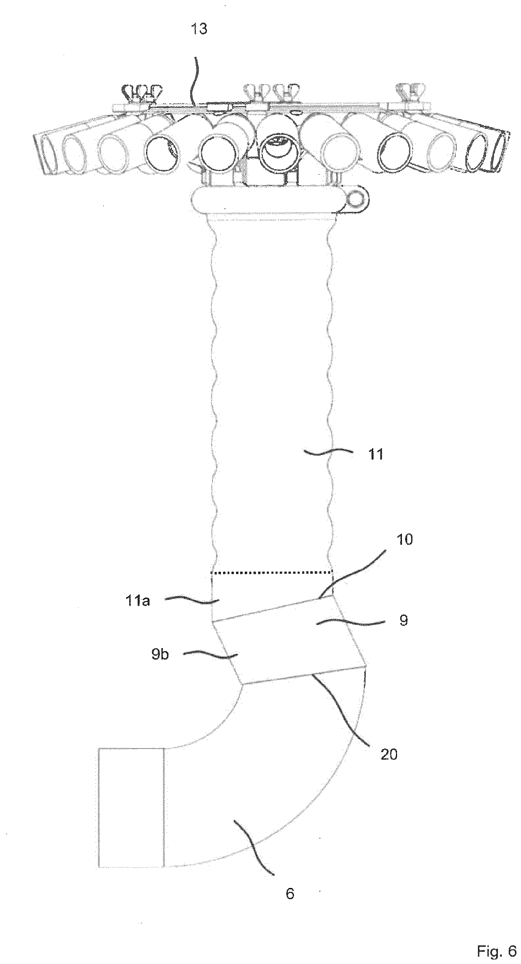

In einer Ausgestaltung kann das eine der mehreren geraden Zwischenrohrteilstücke 9a, welches benachbart zum Zerstreuungsrohr 11 gebildet ist, an dem Zerstreuungsrohr 11 einstückig angeformt sein (vgl. Fig. 6). Auf diese Weise kann es als eingangsseitiges Endstück 11a des Zerstreuungsrohres 11 ausgebildet sein, welches, sofern das Zerstreuungsrohr 11 wie in Fig. 6 gezeigt oberhalb des Endstücks 11a als Wellenrohr ausgeführt ist, frei von der Wellenrohrstruktur ist, also insbesondere mit glatter inneren Oberfläche.

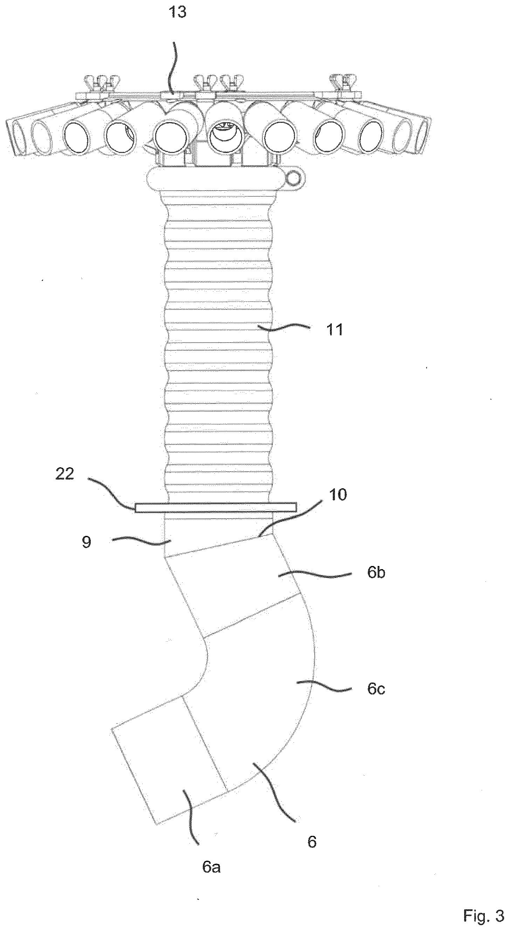

Fig. 3 zeigt eine schematische Darstellung eines Abschnitts einer weiteren Förderleitung, bei dem das Zwischenrohrstück 9 mit der Gehrungsschnittfläche 10 einteilig ausgeführt ist. Bei der gezeigten Ausführung weist der Umlenkbogen 6 gerade Endabschnitt 6a, 6b sowie einen gekrümmten Mittelabschnitt 6c auf, wobei der gekrümmte Mittelabschnitt 6c als 90 Grad Ellbogen ausgeführt ist. Die Gehrungsschnittfläche 10 ist der Ausgangsseite 18 des Zwischenrohrstücks 9 gegenüberliegend gebildet. Oberhalb des Zwischenrohrstücks 9 ist im unteren Bereich des Zerstreuungsrohrs 11 ein optionales Haltelement 22 gezeigt, welches zur Montage des Zerstreuungsrohrs 11 nutzbar ist, zum Beispiel an einem Gehäuse oder einem Rahmen (nicht dargestellt).

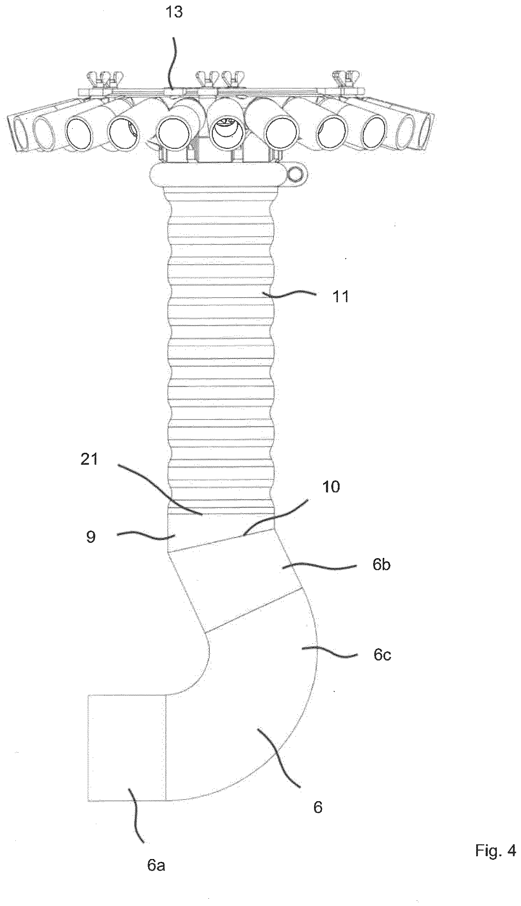

Bei der Ausgestaltung in Fig. 3 erfolgt die Umlenkung, im Unterschied zur Ausführung in Fig. 4, ausgehend von einer Transportrichtung in der Förderleitung 3 schräg zur Horizontalrichtung. In Fig. 4 beschreibt der gekrümmte Mittelabschnitt 6c des Umlenkbogens 6 einen Winkel von kleiner 90 Grad.

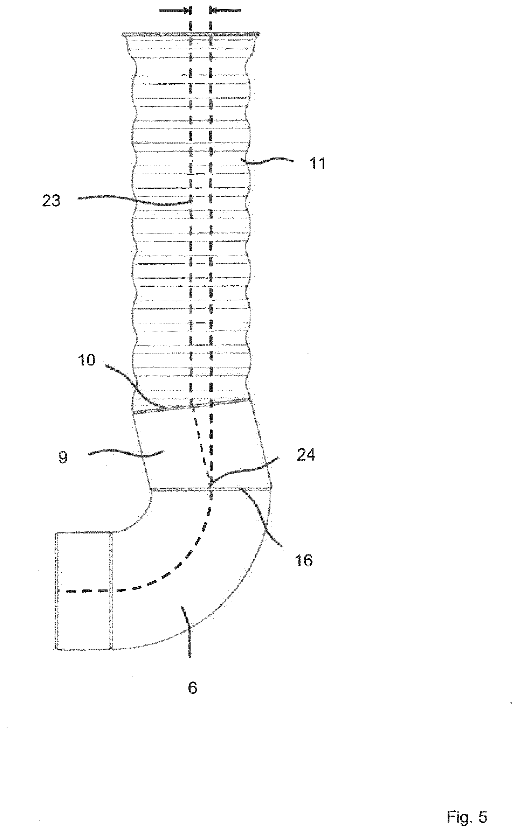

Gemäß Fig. 5, welche eine Ausgestaltung mit einteiligem geraden Zwischenrohrstück 9 zeigt, sind eine Rohrmitte oder ein Rohrzentrum 23 des Zerstreuungsrohres 11 und eine Rohrmitte oder ein Rohrzentrum 24 im Bereich des Rohrausgangs 16 des Umlenkbogens 9 mittels des Zwischenrohrstücks 9 und dessen Gehrungsschnittfläche 10 in horizontaler Richtung zueinander versetzt angeordnet, so dass das zu verteilende Material aus dem Umlenkbogen 9 über das Zwischenrohrstück 9 außermittig in dem Zerstreuungsrohr 11 eingebracht wird. Der Versatz ist mit Hilfe des Zwischenrohrstücks 9 hergestellt. Die Gehrungsschnittfläche 10 ist bei dieser Ausführung auf der dem Zerstreuungsrohr 11 zugewandten Seite des Zwischenrohrstücks 9 gebildet.

Beim Ausführungsbeispiel in Fig. 5 ist das einteilige gerade Zwischenrohrstück 9 direkt mit dem Zerstreuungsrohr 11 verbunden, welches hier als Wellenrohr ausgeführt ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Pneumatisch arbeitende landwirtschaftliche Verteilmaschine zum Verteilen von Saatgut oder Düngemittel, mit
- einem Vorratsbehälter (1) für ein auszubringendes Verteilgut;
- einem mit dem Vorratsbehälter (1) in Verbindung stehenden Dosierorgan (2);
- einem Verteiler (13), der über eine pneumatische Förderleitung (3) mit dem Dosierorgan (2) verbunden ist;
- eine pneumatische Förderleitung (3), bei der im Bereich eines Umlenkbogens (6) ein Richtungswechsel hin zu einem im Wesentlichen aufrechtstehenden Zerstreuungsrohr (11) ausgebildet ist, welches an den Verteiler (13) herangeführt ist; und
- von dem Verteiler (13) zu einzelnen Ausbringorganen führenden Leitungen;
wobei
- ein Rohrausgang (16) des Umlenkbogens (6) und ein Rohreingang (19) des Zerstreuungsrohrs (11) über mindestens ein gerades Zwischenrohrstück (9) miteinander verbunden sind und
- das mindestens eine Zwischenrohrstück (9) auf einer dem Rohrausgang (16) des Umlenkbogens (6) zugewandten Eingangsseite (17) und / oder auf einer dem Rohreingang (19) des Zerstreuungsrohrs (11) zugewandten Ausgangsseite (18) eine Gehrungsschnittfläche (10) aufweist, derart, dass eine Rohrmitte im Bereich des Rohreingangs (19) des Zerstreuungsrohrs (11) und eine Rohrmitte im Bereich der Ausgangsseite des (18) Umlenkbogens (6) in einer Richtung quer zur Längsrichtung des im Wesentlichen aufrechtstehenden Zerstreuungsrohr (11) zueinander versetzt angeordnet sind.

2. Verteilmaschine nach Anspruch 1, **dadurch gekennzeichnet, dass** die pneumatische Förderleitung (3) im Umlenkbogen (6), im mindestens einen Zwischenrohrstück (9) und im Zerstreuungsrohr (11) einen im Wesentlichen gleichen Rohrquerschnitt aufweist.

3. Verteilmaschine nach Anspruch 1 oder 2, **dadurch gekennzeichnet, dass** die pneumatische Förderleitung (3) im Umlenkbogen (6), im mindestens einen Zwischenrohrstück (9) und im Zerstreuungsrohr (11) mit einem runden Rohrquerschnitt ausgeführt ist.

4. Verteilmaschine nach mindestens einem der vorangehenden Ansprüche, **dadurch gekennzeichnet, dass** die pneumatische Förderleitung (3) zumindest im Zerstreuungsrohr (11) eine unebene innere Rohroberfläche aufweist.

5. Verteilmaschine nach mindestens einem der vorangehenden Ansprüche, **dadurch gekennzeichnet, dass** die pneumatische Förderleitung (3) im Umlenkbogen (6) und im mindestens Zwischenrohrstück (9) eine ebene innere Rohroberfläche aufweist.

6. Verteilmaschine nach mindestens einem der vorangehenden Ansprüche, **dadurch gekennzeichnet, dass** der Rohrausgang (16) des Umlenkbogens (6) und der Rohreingang (19) des Zerstreuungsrohrs (11) über mehrere gerade Zwischenrohrteilstücke (9a, 9b) miteinander verbunden sind.

7. Verteilmaschine nach Anspruch 6, **dadurch gekennzeichnet, dass** bei den mehreren Zwischenrohrteilstücken (9a, 9b) einander gegenüberliegende Gehrungsschnittflächen miteinander verbunden sind.

8. Verteilmaschine nach mindestens einem der vorangehenden Ansprüche, **dadurch gekennzeichnet, dass** die Gehrungsschnittfläche (10) auf der dem Rohreingang (19) des Zerstreuungsrohrs (11) zugewandten Ausgangsseite (18) des mindestens einen Zwischenrohrstücks (9) gebildet ist.

9. Verteilmaschine nach mindestens einem der vorangehenden Ansprüche, **dadurch gekennzeichnet, dass** das mindestens eine Zwischenrohrstück (9) am Rohrausgang (16) des Umlenkbogens (6) einstückig angeformt ist.

10. Verteilmaschine nach mindestens einem der vorangehenden Ansprüche, dadurch **ge** - **kennzeichnet**, dass das mindestens eine Zwischenrohrstück (9) am Rohreingang (19) des Zerstreuungsrohrs (11) einstückig angeformt ist.

11. Verteilmaschine nach mindestens einem der vorangehenden Ansprüche, **dadurch gekennzeichnet, dass** die pneumatische Förderleitung (3) einen Schlauchrohrabschnitt (4) aufweist, welcher an einen Rohreingang (15) des Umlenkbogens (6) anschließt.

12. Verteilmaschine nach mindestens einem der vorangehenden Ansprüche, **dadurch gekennzeichnet, dass** der Umlenkbogen (6), das mindestens eine Zwischenrohrstück (9) und / oder das Zerstreuungsrohr (11) jeweils als einstückiger Rohrabschnitt ausgeführt sind.

13. Verteilmaschine nach mindestens einem der vorangehenden Ansprüche, **dadurch gekennzeichnet, dass** mit dem Umlenkbogen (6) eine Umlenkung von wenigstens 90 Grad ausgebildet ist.
